# EUROPÄISCHE PATENTSCHRIFT

(11) **EP 1 444 085 B1**
(45) Veröffentlichungstag und Bekanntmachung des Hinweises auf die Patenterteilung: **04.10.2006**
(21) Anmeldenummer: 02785136.9
(22) Anmeldetag: 30.09.2002
(51) Int. Cl.: B29C 47/88

(54) **BLASKOPF ZUR HERSTELLUNG VON SCHLAUCHFOLIEN AUS THERMOPLASTISCHEM KUNSTSTOFF**
BLOW HEAD FOR PRODUCING TUBULAR FILMS FROM THERMOPLASTIC MATERIAL
TETE DE SOUFFLAGE UTILISEE POUR PRODUIRE DES FILMS TUBULAIRES EN MATIERE THERMOPLASTIQUE

(30) Priorität: 23.10.2001 DE 10152107
(43) Veröffentlichungstag der Anmeldung: 11.08.2004
(73) Patentinhaber: Windmöller & Hölscher, D-49525 Lengerich (DE)
(72) Erfinder: LINKIES, Jürgen, 49536 Lienen (DE); BÜTTEL, Ulrich, 26129 Oldenburg (DE)
(86) Internationale Anmeldenummer: PCT/EP2002/010898
(87) Internationale Veröffentlichungsnummer: WO 2003/035366

(56) Entgegenhaltungen:
- DE-A- 4 204 201
- DE-A- 4 420 023
- PATENT ABSTRACTS OF JAPAN vol. 008, no. 244 (M-337), 9. November 1984 (1984-11-09) & JP 59 123624 A (MITSUI SEKIYU KAGAKU KOGYO KK;OTHERS: 01), 17. Juli 1984 (1984-07-17)

## Beschreibung

Die Erfindung betrifft einen Blaskopf zur Herstellung von Schlauchfolien aus thermoplastischem Kunststoff mit einer Innenkühleinrichtung, bestehend aus einem zentralen Kühl- und Stützluft aus dem zu einer Schlauchfolienblase aufgeblasenen Folienschlauch abführenden Abführungsrohr und aus einem dieses umgebenden Kühlluft zuführenden Ringkanal, dessen äußere Begrenzung mit Durchbrüchen, Bohrungen oder Austrittsspalten versehen ist.

Blasköpfe dieser Art sind in unterschiedlichen Ausführungsformen bekannt. Die aus einem Ringspalt des Blaskopfes austretende und zu einem Schlauch aus schmelzflüssigem Kunststoff ausgeformte Kunststoffschmelze wird dadurch über die Außenwandung des Ringkanals geführt, daß im Endbereich der Schlauchfolienblase aus dieser ein flachgelegter Folienschlauch durch Abzugswalzen abgezogen wird. Um zu verhindern, daß der noch nicht zu einer Schlauchfolienblase aufgeblasene Folienschlauch mit der Außenwand des Ringkanals in Berührung kommt und um eine gute Kühlung des extrudierten Kunststoffschlauches auch von innen her zu erreichen, wird aus den Durchbrüchen, Bohrungen oder Austrittsspalten des Ringkanals Kühlluft auf die Innenwandung des Folienschlauches geblasen. Wird eine zu große Menge von Kühlluft ausgeblasen, kann der abgezogene Folienschlauch und auch die Schlauchfolienblase in unerwünschter Weise flattern und instabil werden. Wird zu wenig Kühlluft ausgeblasen, bildet sich kein ausreichendes Luftpolster aus, das eine Berührung des Folienschlauches mit der Wandung des Ringkanals verhindert. Die Außenwandungen bekannter Ringkanäle bestehen beispielsweise aus Rohren mit siebartigen Lochungen (DE 44 20 023 C2) oder aber auch aus aufeinander geschichteten Ringelementen, die Austrittsspalte begrenzen.

Die Länge der die Ringkanäle begrenzenden Außenwandungen hängt weitgehend auch von dem verarbeiteten Kunststoffmaterial ab. Der extrudierte zunächst schmelzflüssige Kunststoffschlauch wird dabei zunächst mit etwa konstantem Schlauchdurchmesser über den Bereich des Ringkanals abgezogen, wobei der Schlauch durch das Abziehen gereckt und dadurch in seinem Durchmesser so weit verringert wird, daß er an einer vorbestimmten Stelle sektschalenartig zu der Folienblase aufgeweitet wird.

Um je nach dem Durchmesser des extrudierten Folienschlauches, der Spaltbreite des Austrittsspalts des Blaskopfes und dem verarbeiteten Kunststoffmaterial sicherzustellen, daß ein stabiler und flatterfreier Abzug des Kunststoffolienschlauches über den Bereich des Ringkanals und die gewünschte Aufweitung des Folienschlauches zu der Schlauchfolienblase erfolgt, muß die ausgeblasene Kühl- und Stützluftmenge auf die entsprechenden Parameter eingestellt und eingeregelt werden. Dies erfordert jedoch großes Geschick und erhebliche Erfahrung.

Aufgabe der Erfindung ist es daher, einen Folienblaskopf der eingangs angegebenen Art zu schaffen, bei dem sich ausgehend von einer im wesentlichen konstanten Leistung des die Kühlluft zuführenden Gebläses die aus der äußeren Begrenzung des Ringkanals austretende Kühl- und Stützluft automatisch auf die optimale Menge einstellt.

Erfindungsgemäß wird diese Aufgabe dadurch gelöst, daß im Endbereich des Ringkanals eine Ventilanordnung vorgesehen ist, durch die in Abhängigkeit von dem Druck in dem Ringkanal überschüssige, nicht durch die Durchbrüche, Bohrungen oder - Austrittsspalte abgeleitete Luft unmittelbar in die Schlauchfolienblase eintritt. Die erfindungsgemäß vorgesehene Ventilanordnung hält den Luftdruck in dem Ringkanal auf einen im wesentlichen konstanten Wert, so daß unabhängig von der Menge der zugeführten Kühlluft immer die richtige Menge an Luft durch die äußere Begrenzung des Ringkanals austritt, die das gewünschte Luftpolster erzeugt und ein Flattem der Schlauchfolie verhindert. Bei der erfindungsgemäßen Innenkühleinrichtung ist es daher nicht erforderlich, die Leistung des Kühlluftgebläses auf den jeweiligen Betriebszustand einzustellen oder einzuregeln, weil die erfindungsgemäß vorgesehene Ventilanordnung den Luftdruck in dem Ringkanal immer auf dem richtigen Wert hält, sobald die erforderliche Mindestluftmenge durch das Kühlluftgebläse zugeführt wird.

Zweckmäßigerweise ist der zur Öffnung der Ventilanordnung erforderliche Druck einstellbar, um entsprechend den jeweiligen Betriebsparametem den in dem Ringkanal herrschenden Druck auf einen konstanten Druck vorgegebener Höhe einstellen zu können.

Nach einer bevorzugten Ausführungsform ist vorgesehen, daß der Ringkanal an seiner Austrittsseite durch eine aus einer elastischen, ringförmigen Scheibe bestehende Ventilklappe geschlossen ist.

Die ringförmige Scheibe kann mit ihrem äußeren Randbereich an dem äußeren Ring eines mit einem Ringspalt versehenen ringförmigen Ventilkörpers verbunden sein, dessen innerer Ring den Ventilsitz bildet. Dabei kann der Ventilsitz mit dem äußeren Ring durch Stege verbunden sein.

Vorzugsweise ist die ringförmige Scheibe von einem in seiner Breite einstellbaren Haltering abgedeckt, der die Breite des von dem Ventilsitz abhebenden Ringteils der ringförmigen Scheibe begrenzt. Bei diesem in seiner Breite einstellbaren Haltering kann es sich beispielsweise um einen irisblendenförmigen Ring handeln, deren Innendurchmesser sich dann auf diese Weise einstellen läßt.

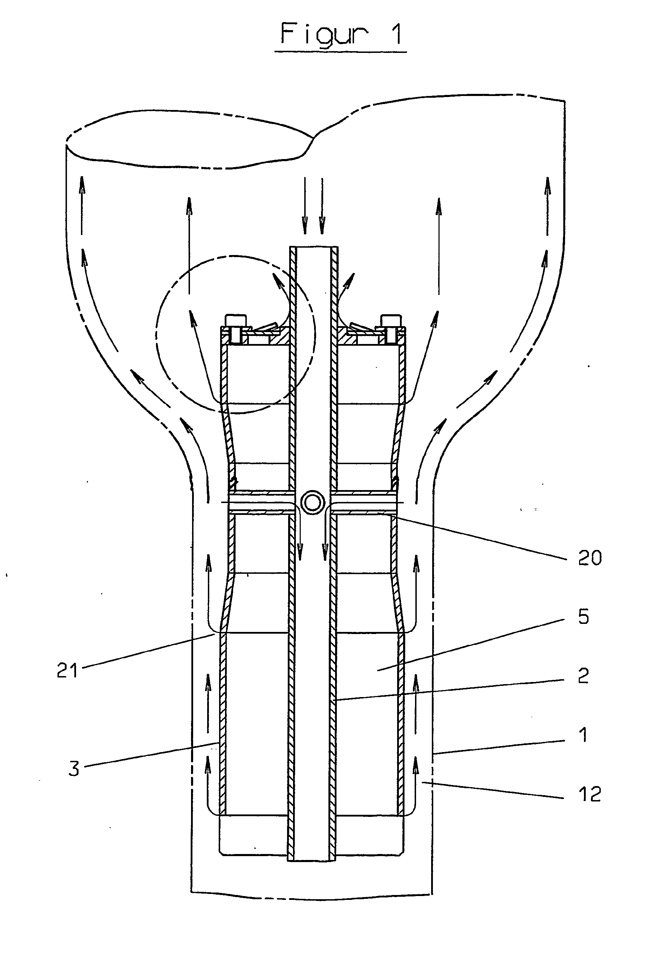

Ein Ausführungsbeispiel der Erfindung wird nachstehend anhand der Zeichnung beschrieben. In dieser zeigt
- Fig. 1: eine Seitenansicht der erfindungsgemäßen Innenkühleinrichtung mit einem über diese abgezogenen und zu einer Schlauchfolienblase aufgeblasenen extrudierten Kunststoffblase und

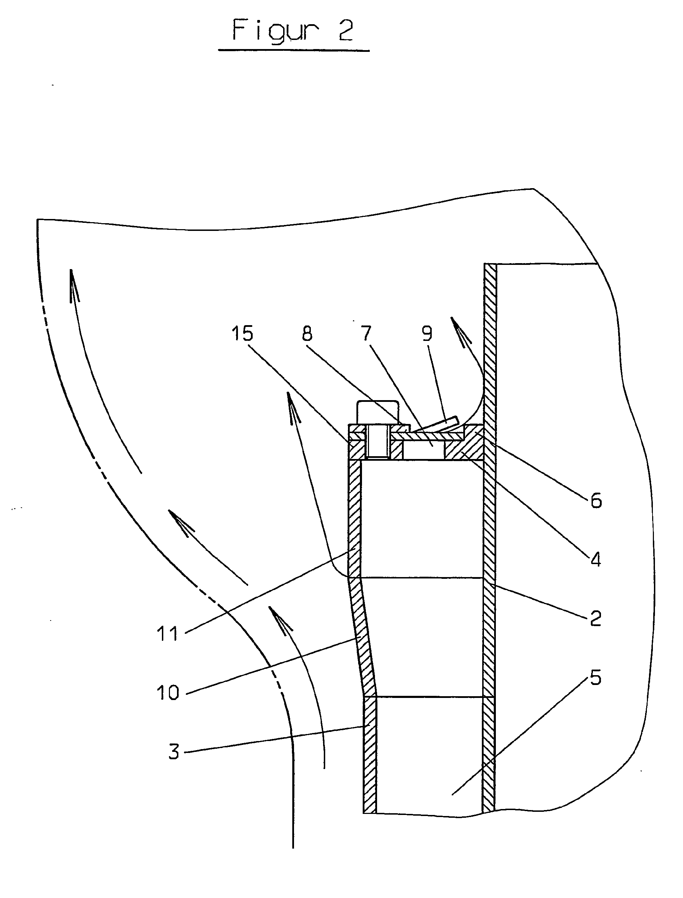

- Fig. 2: den in Fig. 1 eingekreisten Teil in vergrößerter Darstellung.

Aus einem ringförmigen Austrittsspalt des nicht dargestellten Blaskopfs tritt der zunächst noch schmelzflüssige Kunststofffolienschlauch 1 aus. Mittig mit dem Blaskopf ist ein Abführungsrohr 2 für Abluft verbunden, durch das aus der Schlauchfolienblase eingeblasene Kühl- und Stützluft abgezogen wird. Das Abluftrohr 2 ist konzentrisch von einem Rohr 3 eingefaßt, das in seinem Mantel mit Austrittsöffnungen versehen ist. Das Rohr 3 endet unterhalb der Eintrittsöffnung des Abführungsrohrs 2 und trägt an seinem Ende eine ringförmige Scheibe 4, die den zwischen dem Abführungsrohr und dem Rohr 3 gebildeten Ringraum 5 abschließt.

Die Ringscheibe 4 besteht aus einem äußeren Ring 15, der an dem oberen Rand des Rohrs 3 befestigt ist, und aus einem inneren Ring 6, der dichtend an dem Abführungsrohr 2 anliegt und/oder mit diesem verbunden ist. Zwischen dem äußeren Ring 15 und dem inneren Ring 6 der Ringscheibe 4 ist ein Ringspalt 7 gebildet, den Verbindungsstege durchsetzen, die den Ring 15 mit dem Ring 4 verbinden. An dem äußeren Ring ist durch eine ringförmige Klemmscheibe 8 der äußere Randbereich einer elastischen ringförmigen Scheibe 9 befestigt, die eine ringförmige Ventilscheibe bildet, die sich aufgrund ihrer Elastizität mit einer vorgegebenen Vorspannung gegen einen an dem innenring 4 ausgebildeten Ventilsitz anlegt, der durch eine Ringstufe gebildet ist.

Im dargestellten Ausführungsbeispiel weist das Rohr 3 in seinem oberen Bereich eine Verengung auf, die durch zwei gegensinnig angeordnete konusförmige Rohrabschnitte 10 gebildet ist, die zwischen sich einen Rohrabschnitt mit verringertem Durchmesser einschließen. Der Rohrabschnitt mit verringertem Durchmesser ist mit Ventilen versehen, die mit dem Abführungsrohr 2 in Verbindung sind. Im beschriebenen Ausführungsbeispiel weist somit das Rohr 3 in seinem oberen Endbereich einen in seinem Durchmesser verringerten Abschnitt auf, der in diesem Bereich zu einer Druckerhöhung in dem Ringraum 12 zwischen dem Rohr 3 und dem Folienschlauch 1 führt, der die gewünschte plötzliche Aufweitung des Folienschlauchs zur Folienblase in dem sektschalenförmigen Aufweitungsbereich zur Folge hat. In diesem in seinem Durchmesser verringerten Rohrabschnitt sind Ventile angeordnet, durch die der Druck in dem Übergangsbereich von dem Folienschlauch zu der Schlauchfolienblase gesteuert werden kann.

Ein Teil der Innenkühlluft der Innenkühleinrichtung wird durch nicht dargestellte Leitungen in den Ringraum 5 zwischen dem Abführungsrohr 2 und das dieses einfassende Rohr 3 eingeleitet. Ein weiterer Teil der Innenkühlluft wird in den Ringraum zwischen dem abgezogenen Folienschlauch 1 und dem Rohr 3 eingeleitet.

Durch axiales Ausrecken des Folienschlauches 1 wird dieser in seiner Wandstärke verringert, so daß er sich im Endbereich des Rohrs 3 in der dargestellten Weise unter dem Innendruck sektschalenartig zu einer Schlauchfolienblase aufweitet.

Zwischen dem Rohr 3 und dem über dieses abgezogenen Folienschlauch bildet sich ein Stützpolster aufgrund der in den Ringraum 12 zwischen dem Rohr 3 und dem Folienschlauch 1 eingeblasenen Kühlluft und insbesondere auch aufgrund des aus den Öffnungen und/oder Durchbrüchen im Mantel des Rohrs 3 austretenden Kühlluft aus. In dem Ringraum 5 zwischem dem Abführungsrohr 2 und dem Rohr 3 wird Kühl- und/oder Stützluft mit einem Druck eingeblasen, der größer ist als der zur Ausbildung des Stützpolsters zwischen dem Rohr 3 und dem über dieses abgezogenen Folienschlauch 1 erforderlich ist. Die Menge der zur Ausbildung des Stützpolsters erforderlichen Kühlluft ergibt sich aus dem in dem Ringraum 5 zwischen dem Abführungsrohr 2 und dem Rohr 3 eingestellten Luftdruck, wobei die Einstellung durch das Ventil 4, 6 bis 9 und 15, nämlich den Öffnungsdruck der Ventilklappe 9 erfolgt. In dem dargestellten Ausführungsbeispiel ist die erfindungsgemäße Innenkühleinrichtung anhand einer sogenannten Langhalsfahrweise dargestellt, nämlich in einer Betriebsweise, in der der zu einer Folienblase auszureckende Folienschlauch erst dann aufgeblasen wird, wenn er über eine durch das Rohr 3 gebildete Kühlstrecke beträchtlicher Länge geführt worden ist.

| **Bezugszeichenliste** | |
|---|---|
| 1 | Kunststofffolienschlauch |
| 2 | Abführungsrohr |
| 3 | Rohr |
| 4 | Ringscheibe |
| 5 | Ringraum/Ringkanal |
| 6 | innerer Ring |
| 7 | Ringspalt |
| 8 | Klemmscheibe |
| 9 | Ventilklappe |
| 10 | konusförmige Rohrabschnitte |
| 11 | |
| 12 | Ringraum |
| 13 | |
| 14 | |
| 15 | äußerer Ring |
| 16 | |
| 17 | |
| 18 | |
| 19 | |
| 20 | Abluftrohre |
| 21 | Kante |
| | |
| | |
| | |
| | |
| | |
| | |

## Patentansprüche

1. Blaskopf zur Herstellung von Schlauchfolien aus thermoplastischem Kunststoff mit einer Innenkühleinrichtung, bestehend aus einem zentralen Kühl- und - Stützluft aus zu einer Schlauchfolienblase aufgeblasenen Folienschlauch (1) abführenden Abführungsrohr (2) und aus einem dieses umgebenden, Kühlluft zuführenden Ringkanal (5), dessen äußere Begrenzung (3) mit Durchbrüchen, Bohrungen oder Austrittsspalten versehen ist,
**dadurch gekennzeichnet,**
**dass** im Endbereich des Ringkanals (5) eine Ventilanordnung (4, 6 bis 9, 15) vorgesehen ist, durch die in Abhängigkeit von dem Druck in dem Ringkanal (5) überschüssige, nicht durch die Durchbrüche, Bohrungen oder Austrittsspalte abgeleitete Luft unmittelbar in die Schlauchfolienblase eintritt.

2. Blaskopf nach Anspruch 1, **dadurch gekennzeichnet, daß** der zur Öffnung der Ventilanordnung (4, 6 bis 9, 15) erforderliche Druck einstellbar ist.

3. Blaskopf nach Anspruch 1 oder 2, **dadurch gekennzeichnet, daß** der Ringkanal (5) an seiner Austrittsseite durch eine aus einer elastischen, ringförmigen Scheibe (9) bestehenden Ventilklappe geschlossen ist.

4. Blaskopf nach Anspruch 3, **dadurch gekennzeichnet, daß** die ringförmige Scheibe (9) mit ihrem äußeren Randbereich an dem äußeren Ring (5) eines mit einem Ringspalt (7) versehenen ringförmigen Ventilkörpers (4) verbunden ist, dessen innerer Ring (6) den Ventilsitz bildet.

5. Blaskopf nach Anspruch 3 oder 4, **dadurch gekennzeichnet, daß** die ringförmige Scheibe (9) von einem in seiner Breite einstellbaren Haltering abgedeckt ist, der die Breite des von dem Ventilsitz abhebbaren Ringteils der ringförmigen Scheibe begrenzt.

## Claims

1. Blow head for producing tubular films from thermoplastic material, having an internal cooling device, comprising a central lead-off pipe (2), which evacuates cooling and supporting air from film tubing (1) inflated to form a tubular film bubble, and an annular duct (5), which surrounds the said lead-off pipe and supplies cooling air and the outer boundary (3) of which is provided with apertures, bores or discharge slits, **characterized in that** in the end region of the annular duct (5) there is provided a valve arrangement (4, 6 to 9, 15), by which, in dependence on the pressure in the annular duct (5), excess air which has not been led away through the apertures, bores and discharge slits enters directly into the tubular film bubble.

2. Blow head according to Claim 1, **characterized in that** the pressure necessary to open the valve arrangement (4, 6 to 9, 15) is adjustable.

3. Blow head according to Claim 1 or 2, **characterized in that** the annular duct (5) is closed on its discharge side by a valve flap consisting of an elastic, annular disc (9).

4. Blow head according to Claim 3, **characterized in that** the annular disc (9) is connected by its outer rim region to the outer ring (5) of an annular valve body (4) which is provided with an annular gap (7) and the inner ring (6) of which forms the valve seat.

5. Blow head according to Claim 3 or 4, **characterized in that** the annular disc (9) is covered by a width-adjustable retaining ring, which limits the width of that ring part of the annular disc which can be lifted off the valve seat.

## Revendications

1. Tête de soufflage pour produire des feuilles tubulaires en matériau thermoplastique avec une installation de refroidissement intérieur, constituée d'un tuyau d'évacuation central (2) évacuant de l'air de refroidissement et de soutien d'une gaine (1) gonflée par soufflage en une bulle de feuille tubulaire et d'un canal annulaire (5) entourant celui-ci, acheminant de l'air de refroidissement, dont la délimitation extérieure (3) présente des ajours, perçages ou fentes de sortie, **caractérisée en ce qu'**il est prévu dans la zone d'extrémité du canal annulaire (5) un agencement de vanne (4, 6 à 9, 15) par lequel, en fonction de la pression dans le canal annulaire (5), de l'air excédentaire, non évacué à travers les ajours, perçages ou fentes de sortie entre directement dans la bulle de feuille tubulaire.

2. Tête de soufflage selon la revendication 1, **caractérisée en ce que** la pression requise pour l'ouverture de l'agencement de vanne (4, 6 à 9, 15), est réglable.

3. Tête de soufflage selon la revendication 1 ou 2, **caractérisée en ce que** le canal annulaire (5) est fermé à son côté sortie par un clapet de vanne élastique, constitué d'un disque annulaire (9).

4. Tête de soufflage selon la revendication 3, **caractérisée en ce que** le disque annulaire (9) est relié avec sa zone de bord extérieure à la bague extérieure (5) d'un corps de vanne annulaire (4) pourvu d'une fente annulaire (7), dont la bague intérieure (6) forme le siège de vanne.

5. Tête de soufflage selon la revendication 3 ou 4, **caractérisée en ce que** le disque annulaire (9) est recouvert par une bague de retenue à largeur réglable, qui délimite la largeur de la partie annulaire du disque annulaire pouvant être relevée du siège de vanne.
